# EUROPEAN PATENT SPECIFICATION

(11) **EP 0 497 769 B1**
(45) Date of publication and mention of the grant of the patent: **24.07.1996**
(21) Application number: 90909906.1
(22) Date of filing: 07.06.1990
(51) Int. Cl.: H04H 5/00, H04B 1/68

(54) **SYSTEM WITH COMPACT SPECTRUM**
SYSTEM MIT KOMPAKTEM SPEKTRUM
SYSTEME A SPECTRE COMPACT

(30) Priority: 16.06.1989 US 367532
(43) Date of publication of application: 12.08.1992
(73) Proprietor: SEIKO CORPORATION, Tokyo 104 (JP); SEIKO EPSON CORPORATION, Suwa-shi, Nagano-ken (JP)
(72) Inventor: OWEN, Jeffrey, R., Portland, OR 97229 (US)
(74) Representative: Cross, Rupert Edward Blount
(86) International application number: US9003235
(87) International publication number: WO9016120

(56) References cited:
- US-A- 2 898 397
- US-A- 4 594 607
- US-A- 4 870 480
- US-A- 4 914 408

## Description

The present invention relates to radio transmission of information and more particularly to transmission of information using subcarriers on FM broadcast radio stations.

It is well known that information can be transmitted by means of a subcarrier contained on FM broadcast radio waves. Most FM broadcast radio stations use the baseband frequencies from 50 kHz to 53 kHz to transmit stereo program material. In such systems, the baseband frequencies from 53 kHz up to the legal maximum are available for the transmission of other information.

US-A-4,713,808 shows how paging information can be transmitted on a modulated subcarrier which has a symmetrical spectral shape. Such a system could use subcarrier centered at 66.5 kHz and extending symmetrically from 57 to 76 kHz. It would be desirable to have a worldwide compatible paging network which utilizes the technologies described in the above reference patent and using the 57 to 76 kHz band; however, a conflict exists because there is an existing 57 kHz subcarrier on some European FM stations which uses the baseband frequencies from 54.6 kHz to 59.5 kHz.

US-A-4,594,607 discloses a method of demodulating sampled data chrominance signals which include asymmetrical sidebands. In this method filters are used to filter the signals to convert asymmetrical sideband signals to a vestigial sideband I signal.

According to one aspect, the present invention provides a method of transmitting an information signal modulated by a carrier signal having a carrier frequency, the method comprising the steps of
a) passing said modulated information signal through a filter which has an asymmetrical frequency response with respect to said carrier frequency, said frequency response of said filter having a shape equal to a shape formed by cutting off a portion of one of the side bands, flipping said portion about said carrier frequency and adding said portion to a corresponding portion of the other side band, and
b) transmitting the filtered modulated information signal.

According to a second aspect, the present invention provides a method of transmitting and receiving an information signal modulated by a carrier signal having a carrier frequency, the method comprising the steps of
a) passing said modulated information signal through a filter which has an asymmetrical frequency response with respect to said carrier frequency, said frequency response of said filter having a shape equal to a shape formed by cutting off a portion of one of the side bands, flipping said portion about said carrier frequency and adding said portion to a corresponding portion of the other side band,
b) transmitting the filtered modulated information signal,
c) receiving said modulated filtered information signal, and
d) sampling said modulated filtered information signal at a frequency of twice said carrier frequency, whereby the aliasing caused by the sampling generates a signal having a single side band equal in amplitude to the amplitude of one side band of said filtered modulated information signal summed with the amplitude of the other side band of said filtered modulated information signal flipped about said carrier frequency.

According to a third aspect, the present invention provides a system for transmitting an information signal modulated by a carrier signal having a carrier frequency, the system comprising:
a) a band pass filter having an asymmetrical frequency response with respect to said carrier frequency, said frequency response of said filter having a shape equal to a shape formed by cutting off a portion of one of the side bands, flipping said portion about said carrier frequency, and adding said portion to a corresponding portion of the other side band, said band pass filter being arranged to receive and filter said modulated information signal to generate a filtered modulated information signal, and
b) a transmitter for transmitting said filtered modulated information signal.

According to a fourth aspect, the present invention provides a system for transmitting and receiving an information signal modulated by a carrier signal having a carrier frequency, the system comprising:
a) a band pass filter having an asymmetrical frequency response with respect to said carrier frequency, said frequency response of said filter having a shape equal to a shape formed by cutting off a portion of one of the side bands, flipping said portions about said carrier frequency, and adding said portion to a corresponding portion of the other side band, said band pass filter being arranged to receive and filter said modulated information signal to generate a filtered modulated information signal,
b) a transmitter for transmitting said filtered modulated information signal,
c) a receiver for receiving said filtered modulated information signal, and
d) a sampling circuit for sampling said filtered modulated information signal at a frequency of twice said carrier frequency, to generate a signal by aliasing having a single side band equal in amplitude to the amplitude of one side band of said filtered modulated information signal summed with the amplitude of the other said band of said filtered modulated information signal flipped about said carrier frequency.

One embodiment of the present invention provides a transmission method and system whereby both the 66.5 kHz subcarrier and the 57 kHz subcarrier can coexist on a single FM broadcast signal with only minimal interference with each other.

This embodiment of the present invention provides a technique for modifying the modulation of the 66.5 kHz subcarrier in such a way that its spectrum will not overlap that required by the 57 kHz subcarrier, while at the same time maintaining compatibility with existing subcarrier receivers. A special signal is created whose spectral shape is asymmetrical with respect to the 66.5 kHz subcarrier. In the frequency domain, the lowest frequency part of the symmetrical spectrum is cut off, flipped about the carrier frequency and then added to the highest frequency part of the spectrum. This technique and system takes advantage of the fact that the receiver, with which the system is designed to operate, uses a sampling process which produces frequency aliasing. The spectral shape produced at the transmitter is such that the aliasing caused by sampling in the receiver results in the lower-than-carrier and higher-than-carrier portions of the spectrum being added together, producing in the receiver a symmetrical spectrum.

Embodiments of the present invention will now be described with reference to the drawings in which:
Figure 1 is a block diagram of the transmission system used in one embodiment of the present invention,
Figure 2 is a block diagram of a receiver system used in one embodiment of the present invention,
Figure 3 is a diagram showing the baseband spectrum of a typical FM broadcast station,
Figure 4 is a diagram showing the baseband spectrum of a typical FM broadcast station containing both the 57 kHz subcarrier common in Europe as well as the modified 66.5 kHz subcarrier as described herein,
Figures 5a to 5e show the effect of the frequency aliasing caused by the sampling in the receiver on a symmetrical signal,
Figures 6a and 6b show the generation of the asymmetrical spectrum from the symmetrical spectrum, and
Figures 7a to 7e show the effect of the frequency aliasing caused by the sampling in the receiver on an asymmetrical signal constructed in accordance with one embodiment of the present invention.

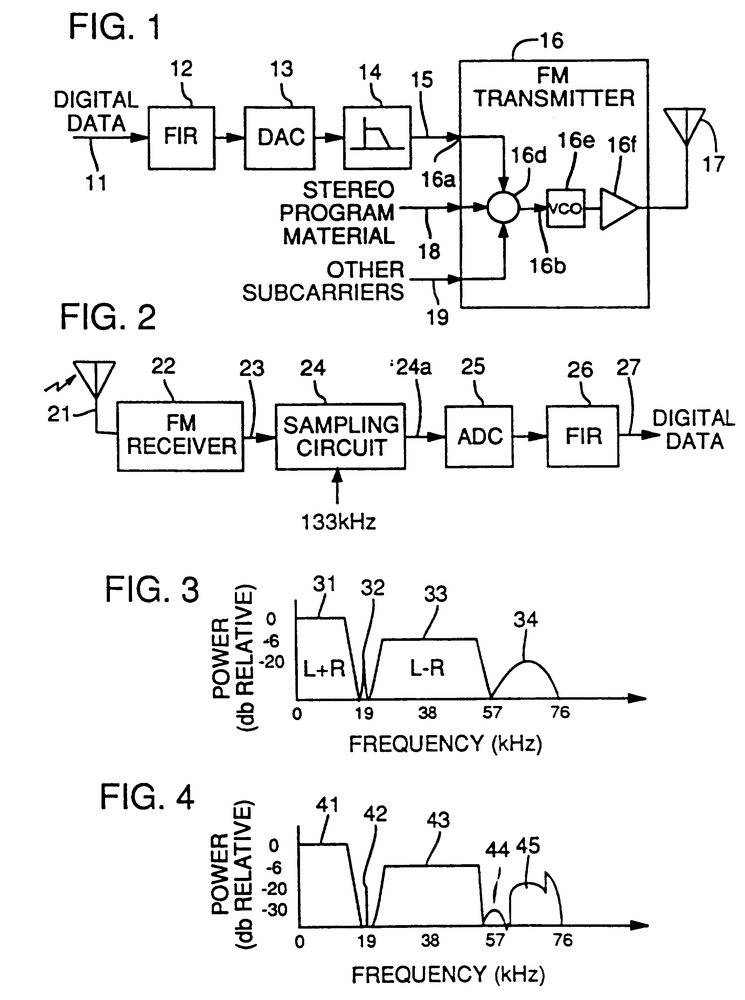

One embodiment of the present invention is designed to operate in a system that includes a transmission system such as that shown in Figure 1 and a receiver system such as that shown in Figure 2. A system of the general type shown in Figures 1 and 2, which can utilize a subcarrier in the frequency band from 57 kHz to 76 kHz, is described in US-A-4,713,808. In some European countries there is a preexisting subcarrier which utilizes the frequency band from 54.6 kHz to 59.4 kHz. The embodiment of the present invention allows both systems to coexist without conflict.

The transmission system show in Figure 1 includes the following: A digital data signal 11 is passed through a Finite Impulse Response (FIR) Filter 12 which has a certain frequency response, the characteristics of which will be described in detail later. The output of the FIR filter 12 is passed through a digital to analog converter (DAC) 13 and then a low pass filter 14, creating a band limited analog subcarrier signal 15 which is then applied to the subcarrier input port 16a of a broadcast FM transmitter 16. As is conventional, transmitter 16 includes a summation circuit 16d, a voltage controlled oscillator 16e and an amplifier 16f. Radio frequency energy from the FM transmitter 16 is then broadcasted as FM radio waves by an antenna 17. Contained within the transmitter 16 is a signal termed the baseband signal 16b which consists of the summation of the subcarrier 15, the stereo program material 18, and any other subcarriers that may be present 19. Such transmitters and antennas are commercially available.

The receiver system shown in Figure 2 includes the following: An antenna 21 for converting radio waves into electrical signals which are then amplified and demodulated by a conventional or unconventional FM receiver 22 capable of tuning over the range of the international FM broadcast bands. The output 23 of receiver 22, consists of the summation of the baseband signal 16b of the FM broadcast station plus noise and interference generated in the process of broadcasting and receiving. This signal 23 is then sampled at a rate of 133 kHz by the sampling circuit 24 and digitized by an analog to digital converter 25. After digitization, the signal is applied to an FIR filter 26 which has an appropriate passband so as to produce the desired digital data on its output 27. The details of the functional blocks in the receiver which form no part of the inventive contribution of the present invention, are not described further since their operation and construction can be understood by one skilled in the art.

According to one embodiment, the present invention relates to the design of the spectrum of the subcarrier signal 15 that is transmitted by the system shown in Figure 1 and received by the receiver system in Figure 2. The spectrum of the subcarrier signal is designed to minimize the interference between two particular subcarrier signals. In particular, a subcarrier signal 15 whose spectrum normally extends from 57 kHz to 76 kHz is modified in such a way that it does not interfere with an existing subcarrier signal whose spectrum extends from 54.6 kHz to 59.4 kHz and yet is processed by the receiver system in Figure 2 as if its spectrum was the normal unmodified spectrum.

Figure 3 shows the spectrum of the baseband signal which exists when the only the normal subcarrier is present. The stereo program material is contained in three areas of the spectrum, left plus right 31, stereo pilot 32, and left minus right 33. Their function is common knowledge to one skilled in the art and is not described further herein. The normal subcarrier 34, as described in US-A-4,713,808 has a spectrum which is symmetric about its 66.5 kHz carrier frequency.

Figure 4 shows the spectrum of the baseband signal which exists when both of the particular subcarriers are present. As in figure 3, the stereo program material is contained in three areas, 41, 42, and 43. The particular subcarrier whose spectrum extends from 54.6 kHz to 59.4 kHz is shown as area 44, while the modified subcarrier is shown as area 45. This modified subcarrier has an asymmetrically shaped spectrum and occupies a frequency band from 61.25 kHz to 76 kHz.

The present invention takes advantage of the frequency aliasing that occurs whenever a continuous-time signal is converted into a discrete-time signal by means of a sampling process. Frequency aliasing is a phenomena whereby the entire frequency spectrum is divided into equal segments which are then superimposed creating a spectrum whose total domain has a bandwidth equal to that of the sampling rate. In a system such as that described herein where the sampling rate is 133 kHz, the finite domain for the spectrum of the discrete-time signal can be chosen to be from -66.5 to +66.5 kHz.

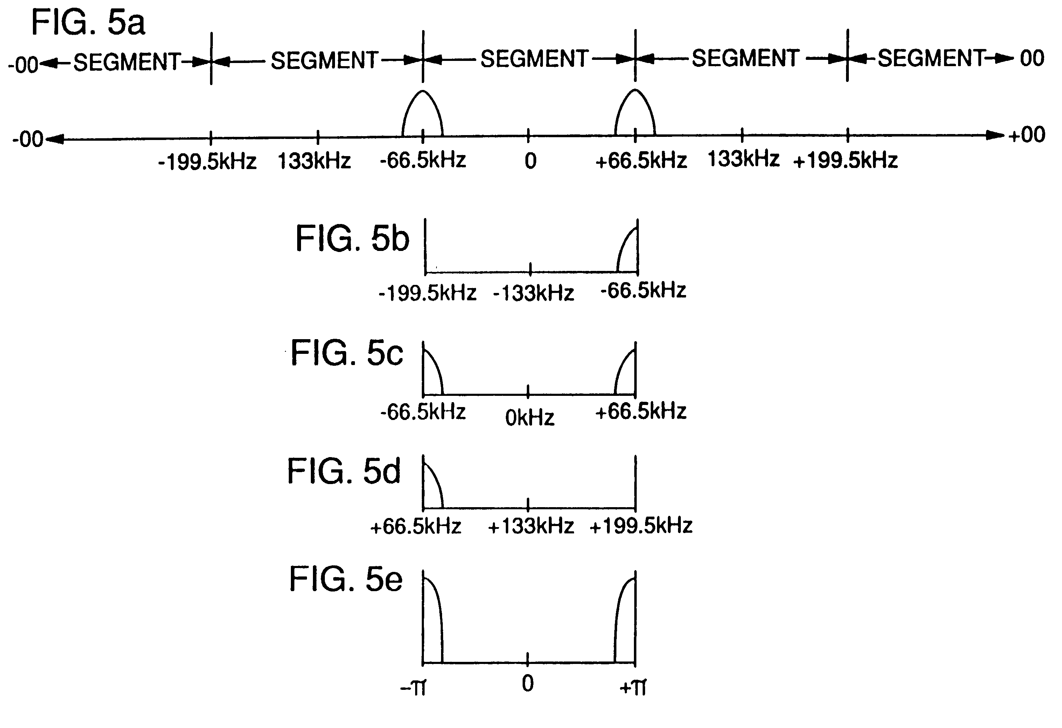

The effect of frequency aliasing on the normal signal with a symmetrical spectrum centered at 66.5 kHz which is sampled at 133 kHz is shown in Figures 5a to 5e. Figure 5a shows the spectrum of the continuous-time signal and indicates the locations of the segments into which the entire spectrum will be divided. Although there are and infinite number of segments, only three contain any signal; from -199.5 to -66.5 kHz, from -66.5 to 66.5 kHz, and from +66.5 to +199.5 kHz. These segments are shown in Figures 5b, 5c and 5d, respectively. The spectrum of the discrete-time sampled signal is shown in Figure 5e, and consists of the summation of the three segments shown in Figures 5b, 5c, and 5d.

As previously explained, this embodiment of the present invention is designed to operate in an environment where the spectrum from 54.6 to 59.4 kHz is occupied by an existing system. With this embodiment of the present invention, instead of having an FIR filter 12 generate a spectrum which is symmetrical with respect to the 66.5 kHz carrier and extends from 57 to 76 kHz, a spectrum is generated which is asymmetrical and extends from 61.25 to 76 kHz. The shape of the spectrum is chosen and coordinated with the frequency aliasing action of sampling circuit 24 such that the signal produced at the sampling circuit output 24a, is identical to that which would have been produced if FIR filter 12 had generated the symmetrical spectrum extending from 57 to 76 kHz.

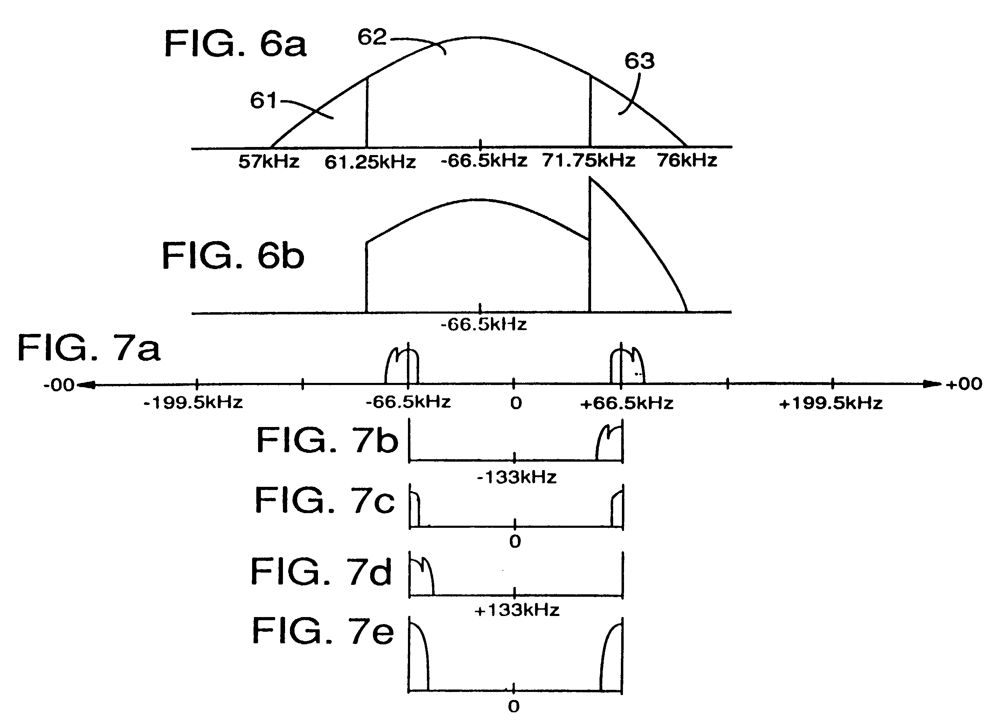

In order to understand the operation of this embodiment of the present invention, consider the positive frequency portion of the symmetrical spectrum centered at 66.5 kHz and divided into three parts 61, 62 and 63 as shown in Figure 6a.

Also consider that part 61 in the lower sideband is cut from the spectrum, and then flipped about the 66.5 kHz axis and added to part 63 in the upper sideband as shown in Figure 6b. Since parts 61 and 63 are mirror images of each other this cut-and-flip operation has the effect of eliminating all of the frequencies from 57 to 61.25 kHz and doubling the amplitudes of all frequencies from 71.75 to 76 kHz.

When such a signal is transmitted, received and sampled, the phenomena of frequency aliasing will occur as previously explained. The effect of frequency aliasing on the signal with the chosen asymmetrical spectrum which is sampled at 133 kHz is shown in Figures 7a to 7e. Figure 7a shows the spectrum of the continuous-time signal and indicates the locations of the segments into which the entire spectrum will be divided. Although there are and infinite number of segments, only three contain any signal; from -199.5 to -66.5 kHz, from - 66.5 to 66.5 kHz, and from +66.5 to +199.5 kHz. These segments are shown in Figures 7b, 7c and 7d, respectively. The spectrum of the discrete-time sampled signal is shown in Figure 7e, and consists of the summation of the three segments shown in Figures 7b, 7c, and 7d. Because of the way in which the asymmetrical spectrum was designed, the spectrum of the sampled signal shown in Figure 7e is identical to that shown in Figure 5e.

Thus using this embodiment of the present invention, a worldwide paging system such as that shown in US-A-4,713,808, which normally uses the frequencies from 57 to 76 kHz can be implemented. On FM broadcast stations where the frequencies from 54.6 to 59.4 kHz are already occupied by an existing subcarrier, the FIR filter in the transmitter 12 can utilize the previously described asymmetrical spectrum so that there will be no interference with the existing subcarrier. No change is necessary in the receivers.

The relationship that must exist for the present invention to operate is that the sampling rate must be twice the carrier frequency. In this way the parts of the spectrum of appropriately superimposed.

## Claims

1. A method of transmitting an information signal modulated by a carrier signal having a carrier frequency, the method comprising the steps of
a) passing said modulated information signal through a filter (12) which has an asymmetrical frequency response with respect to said carrier frequency, said frequency response of said filter (12) having a shape equal to a shape formed by cutting off a portion of one of the side bands, flipping said portion about said carrier frequency and adding said portion to a corresponding portion of the other side band, and
b) transmitting the filtered modulated information signal.

2. A method of transmitting and receiving an information signal modulated by a carrier signal having a carrier frequency, the method comprising the steps of
a) passing said modulated information signal through a filter (12) which has an asymmetrical frequency response with respect to said carrier frequency, said frequency response of said filter (12) having a shape equal to a shape formed by cutting off a portion of one of the side bands, flipping said portion about said carrier frequency and adding said portion to a corresponding portion of the other side band,
b) transmitting the filtered modulated information signal,
c) receiving said modulated filtered information signal, and
d) sampling said modulated filtered information signal at a frequency of twice said carrier frequency, whereby the aliasing caused by the sampling generates a signal having a single side band equal in amplitude to the amplitude of one side band of said filtered modulated information signal summed with the amplitude of the other side band of said filtered modulated information signal flipped about said carrier frequency.

3. A system for transmitting an information signal modulated by a carrier signal having a carrier frequency, the system comprising:
a) a band pass filter (12) having an asymmetrical frequency response with respect to said carrier frequency, said frequency response of said filter (12) having a shape equal to a shape formed by cutting off a portion of one of the side bands, flipping said portion about said carrier frequency, and adding said portion to a corresponding portion of the other side band, said band pass filter (12) being arranged to receive and filter said modulated information signal to generate a filtered modulated information signal, and
b) a transmitter (16) for transmitting said filtered modulated information signal.

4. A system for transmitting and receiving an information signal modulated by a carrier signal having a carrier frequency, the system comprising:
a) a band pass filter (12) having an asymmetrical frequency response with respect to said carrier frequency, said frequency response of said filter (12) having a shape equal to a shape formed by cutting off a portion of one of the side bands, flipping said portions about said carrier frequency, and adding said portion to a corresponding portion of the other side band, said band pass filter (12) being arranged to receive and filter said modulated information signal to generate a filtered modulated information signal,
b) a transmitter (16) for transmitting said filtered modulated information signal,
c) a receiver (22) for receiving said filtered modulated information signal, and
d) a sampling circuit (24, 25) for sampling said filtered modulated information signal at a frequency of twice said carrier frequency, to generate a signal by aliasing having a single side band equal in amplitude to the amplitude of one side band of said filtered modulated information signal summed with the amplitude of the other said band of said filtered modulated information signal flipped about said carrier frequency.

## Patentansprüche

1. Verfahren zum Senden eines Informationssignals, das durch ein Trägersignal mit einer Trägerfrequenz moduliert ist, wobei das Verfahren die Schritte umfaßt:
a) Durchgeben des modulierten Informationssignals durch einen Filter (12), der eine asymmetrische Frequenzantwort bezüglich der Trägerfrequenz aufweist, wobei die Frequenzantwort des Filters (12) eine Form gleich einer Form aufweist, die durch Abschneiden eines Abschnitts eines der Seitenbänder, Klappen des Abschnitts um die Trägerfrequenz und Zuaddieren des Abschnitts zu einem entsprechenden Abschnitt des anderen Seitenbands gebildet ist, und
b) Senden des gefilterten modulierten Informationssignals.

2. Verfahren zum Senden und Empfangen eines Informationssignals, das durch ein Trägersignal mit einer Trägerfrequenz moduliert ist, wobei das Verfahren die Schritte umfaßt:
a) Durchgeben des modulierten Informationssignals durch einen Filter (12), der eine asymmetrische Frequenzantwort bezüglich der Trägerfrequenz aufweist, wobei die Frequenzantwort des Filters (12) eine Form gleich einer Form aufweist, die durch Abschneiden eines Abschnitts eines der Seitenbänder, Klappen des Abschnitts um die Trägerfrequenz und Zuaddieren des Abschnitts zu einem entsprechenden Abschnitt des anderen Seitenbands gebildet ist,
b) Senden des gefilterten modulierten Informationssignals,
c) Empfangen des modulierten gefilterten Informationssignals, und
d) Abtasten des modulierten, gefilterten Informationssignals mit einer Frequenz gleich dem Doppeltem der Trägerfrequenz, wobei der durch das Abtasten verursachte Alias-Effekt ein Signal erzeugt, das ein einzelnes Seitenband aufweist, das in der Amplitude gleich der Summe der Amplitude eines Seitenbands des gefilterten modulierten Informationssignals und der Amplitude des anderen Seitenbands des gefilterten modulierten Informationssignals, das um die Trägerfrequenz geklappt ist, ist.

3. System zum Senden eines Informationssignals, das durch ein Trägersignal mit einer Trägerfrequenz moduliert ist, wobei das System umfaßt:
a) einen Bandpaßfilter (12), der eine asymmetrische Frequenzantwort bezüglich der Trägerfrequenz aufweist, wobei die Frequenzantwort des Filters (12) eine Form gleich einer Form aufweist, die durch Abschneiden eines Abschnitts eines der Seitenbänder, Klappen des Abschnitts um die Trägerfrequenz und Zuaddieren des Abschnitts zu einem entsprechenden Abschnitt des anderen Seitenbands gebildet ist, wobei der Bandpaßfilter (12) dazu eingerichtet ist, das modulierte Informationssignal zu empfangen und zu filtern, um ein gefiltertes moduliertes Informationssignal zu erzeugen, und
b) einen Sender (16) zum Senden des gefilterten modulierten Informationssignals.

4. System zum Senden und Empfangen eines Informationssignals, das durch ein Trägersignal mit einer Trägerfrequenz moduliert ist, wobei das System umfaßt:
a) einen Bandpaßfilter (12), der eine asymmetrische Frequenzantwort bezüglich der Trägerfrequenz aufweist, wobei die Frequenzantwort des Filters (12) eine Form gleich einer Form aufweist, die durch Abschneiden eines Abschnitts eines der Seitenbänder, Klappen des Abschnitts um die Trägerfrequenz und Zuaddieren des Abschnitts zu einem entsprechenden Abschnitt des anderen Seitenbands gebildet ist, wobei der Bandpaßfilter (12) dazu ausgelegt ist, das modulierte Informationssignal zu empfangen und zu filtern, um ein gefiltertes moduliertes Informationssignal zu erzeugen,
b) einen Sender (16) zum Senden des gefilterten modulierten Informationssignals,
c) einen Empfänger (22) zum Empfangen des gefilterten modulierten Informationssignals, und
d) eine Abtastschaltung (24, 25) zum Abtasten des gefilterten modulierten Informationssignals mit einer Frequenz gleich dem Doppelten der Trägerfrequenz, um durch den Alias-Effekt ein Signal zu erzeugen, das ein einzelnes Seitenband aufweist, das in der Amplitude gleich der Summe der Amplitude eines Seitenbands des gefilterten modulierten Informationssignals und der Amplitude des anderen Seitenbands des gefilterten modulierten Informationssignals, das um die Trägerfrequenz geklappt ist, ist.

## Revendications

1. Procédé d'émission d'un signal d'information modulé par un signal porteur ayant une fréquence porteuse, le procédé comprenant les étapes qui consistent :
a) à faire passer ledit signal d'information modulé à travers un filtre (12) qui a une réponse en fréquence asymétrique par rapport à ladite fréquence porteuse, ladite réponse en fréquence dudit filtre (12) ayant une forme identique à la forme obtenue en coupant une partie de l'une des bandes latérales, en repliant ladite partie par rapport à ladite fréquence porteuse et en additionnant ladite partie à une partie correspondante de l'autre bande latérale, et
b) à émettre le signal d'information modulé filtré.

2. Procédé d'émission et de réception d'un signal d'information modulé par un signal porteur ayant une fréquence porteuse, le procédé comprenant les étapes qui consistent :
a) à faire passer ledit signal d'information modulé à travers un filtre (12) qui a une réponse en fréquence asymétrique par rapport à ladite fréquence porteuse, ladite réponse en fréquence dudit filtre (12) ayant une forme identique à la forme obtenue en coupant une partie de l'une des bandes latérales, en repliant ladite partie par rapport à ladite fréquence porteuse et en additionnant ladite partie à une partie correspondante de l'autre bande,
b) à émettre le signal d'information modulé filtré,
c) à recevoir ledit signal d'information filtré modulé, et
d) à échantillonner ledit signal d'information filtré modulé à une fréquence égale au double de ladite fréquence porteuse, de façon que le repliement de spectre provoqué par l'échantillonnage génère un signal ayant une bande latérale unique d'amplitude égale à l'amplitude d'une bande latérale dudit signal d'information modulé filtré, additionnée à l'amplitude de l'autre bande latérale dudit signal d'information modulé filtré repliée par rapport à ladite fréquence porteuse.

3. Système pour émettre un signal d'information modulé au moyen d'un signal porteur ayant une fréquence porteuse, le système comprenant :
a) un filtre (12) passe-bande ayant une réponse en fréquence asymétrique par rapport à ladite fréquence porteuse, ladite réponse en fréquence dudit filtre (12) ayant une forme identique à une forme obtenue en coupant une partie de l'une des bandes latérales, en repliant ladite partie par rapport à ladite fréquence porteuse, et en additionnant ladite partie à une partie correspondante de l'autre bande latérale, ledit filtre (12) passe-bande étant conçu pour recevoir et filtrer ledit signal d'information modulé afin de générer un signal d'information modulé filtré, et
b) un émetteur (16) pour émettre ledit signal d'information modulé filtré.

4. Système pour émettre et recevoir un signal d'information modulé par un signal porteur ayant une fréquence porteuse, le système comprenant :
a) un filtre (12) passe-bande ayant une réponse en fréquence asymétrique par rapport à ladite fréquence porteuse, ladite réponse en fréquence dudit filtre (12) ayant une forme identique à la forme obtenue en coupant une partie de l'une des bandes latérales, en repliant ladite partie par rapport à ladite fréquence porteuse, et en additionnant ladite partie à une partie correspondante de l'autre bande latérale, ledit filtre (12) passe-bande étant conçu pour recevoir et filtrer ledit signal d'information modulé afin de générer un signal d'information modulé filtré,
b) un émetteur (16) pour émettre ledit signal d'information modulé filtré,
c) un récepteur (22) pour recevoir ledit signal d'information modulé filtré, et
d) un circuit (24, 25) d'échantillonnage pour échantillonner ledit signal d'information modulé filtré à une fréquence égale au double de ladite fréquence porteuse, afin de générer un signal par repliement spectral ayant une bande latérale unique égale en amplitude à l'amplitude d'une bande latérale dudit signal d'information modulé filtré, additionnée à l'amplitude de ladite autre bande dudit signal d'information modulé filtré, repliée par rapport à ladite fréquence porteuse.
